# EUROPÄISCHE PATENTANMELDUNG

(11) **EP 1 022 886 A2**
(43) Veröffentlichungstag der Anmeldung: **26.07.2000**
(21) Anmeldenummer: 99124173.8
(22) Anmeldetag: 03.12.1999
(51) Int. Cl.: H04M 1/60

(54) **Kommunikationsgerät mit auswahl der Übertragungsfunktion mittels Mustersignalfolge**

(30) Priorität: 19.01.1999 DE 19901842
(71) Anmelder: MOTOROLA, INC., Schaumburg, IL 60196 (US)
(72) Erfinder: Bingel, Reiner, 65558 Eppenrod (DE); Gärtner, Hans-Peter, 65203 Wiesbaden (DE)
(74) Vertreter: Richardt, Markus Albert

(57) **Zusammenfassung**

Ein Kommunikationsgerät (100), wie z.B. ein Mobiltelefon, verfügt über einen an den Hörer (130) angeschlossenen Equalizer. In einer ersten Betriebsart leitet der Equalizer (120) eine vorherbestimmte Signalfolge (145, z.B. Sprache) von einem eingebauten Speicher (140) nacheinander mit verschiedenen, voreingestellten Frequenzgängen (H1,...,HN) an den Hörer (130) weiter. Dabei wird der Benutzer des Gerätes (100) über eine Schnittstelle aufgefordert, die ihm subjektiv am verständlichsten erscheinende Folge (135) und damit einen bevorzugten Frequenzgang anzugeben. In einer zweiten Betriebsart leitet der Equalizer (120) ein Sprachsignal von dem Empfänger (110) mit den vom Benutzer bevorzugtem Frequenzgang (Hk) an den Hörer (130) weiter.

## Beschreibung

### Gebiet der Erfindung

Die vorliegende Erfindung betrifft Sprachkommunikationsgeräte im allgemeinen und tragbare Funkgeräte bzw. Mobilfunkgeräte im besonderen.

### Hintergrund der Erfindung

Benutzer von Sprachkommunikationsgeräten wie z.B. Mobiltelefonen, Bündelfunk- oder Betriebsfunkgeräten (im folgenden "Geräte") wünschen eine hohe Verständlichkeit der Stimme ihres Gesprächspartners. In einer Übertragungskette aus z.B. Mikrofon, Sender, Antenne (beim Gesprächspartner), Funkstrecke, sowie Antenne, Empfänger, Verstärker und elektroakustischem Wandler (beim Benutzer) sollte die Stimme des Gesprächspartners möglichst so übertragen werden, daß der Benutzer einen ähnlichen Klangeindruck wie bei einem direkten Gespräch empfindet. Neben der Lautstärke wird die Verständlichkeit dabei auf der Benutzerseite vor allem durch den Frequenzgang (frequenzabhängige Signalübertragungsfunktion) des Verstärkers und des Wandlers bestimmt. Besonders bei mobilen Kommunikationsgeräten kommt der Einfluß wechselnder Umgebungsbedingungen hinzu. So nimmt beispielsweise die Silbenverständlichkeit von gesprochener Sprache bei zunehmender Nachhallzeit eines Raumes ab (Verhältnis von indirektem Schall zu direktem Schall). Der Abstand zwischen Nutzschallstärke (vom Wandler) und Störschallstärke (Umgebung) beeinflußt die Verständigung in erheblichem Maße.

Die Geräte werden beispielsweise mit Lautsprechern, Kopfhörern, Ohrhörern oder Telefonhörerkapseln als Wandler in den verschiedensten (leisen und lauten) Räumen wie z.B. in Büros, Fahrzeugen, oder Werkhallen betrieben. Dabei können Wandler und Raum beliebig kombiniert werden, wobei bestimmte Kombinationen am häufigsten vorkommen (z.B. Hörerkapsel im Büro, Lautsprecher im Auto). Jede Kombination verfügt über einen eigenen Klangeindruck.

Die Verständlichkeit wird aber nicht nur durch objektive, technische Kriterien bestimmt. Vielmehr verfügt jeder Benutzer über seine eigene, subjektive Wahrnehmung. So nimmt mit zunehmendem Alter die Hörfähigkeit besonders bei hohen Tönen ab.

Zur Verbesserung der Verständlichkeit kann die Übertragungskette mit passiven bzw. aktiven Filtern ausgestattet werden, die Signale bei bestimmten Frequenzen dämpfen (passive Filter) bzw. verstärken (aktive Filter). Die Filter können zweckmäßigerweise in den Verstärker auf der Benutzerseite integriert werden.

Kontinuierlich bzw. stufenweise abstimmbare Filter, auch unter der Bezeichnung "Equalizer" bekannt, erfordern Bedienelemente, mit denen der Benutzer beim Hören (d.h. während eines Gespräches) den für ihn geeignetsten Frequenzgang einstellt. Dabei wird der Benutzer zumindest mit den folgenden Nachteilen konfrontiert:
(a) Das Gespräch ist üblicherweise zu kurz, um innerhalb der Gesprächszeit wirksam Einstellungen vornehmen zu können.
(b) Einstellungen des Frequenzgangs werden hinfällig, sobald der Benutzer einen anderen Wandlertyp wählt (z.B. Lautsprecher statt Hörerkapsel) und/oder sich in eine andere Umgebung begibt (z.B. vom Auto ins Büro). Neueinstellungen bzw. Änderungen wären erforderlich.
(c) Hält während des Gesprächs der Benutzer das Gerät mit der einen Hand am Ohr, kann er zum kontinuierlichen Einstellen des Frequenzgangs u.U. Equalizer-Bedienelemente am Gerät nur mühsam (evtl. mit der anderen Hand) betätigen.

Der vorliegenden Erfindung liegt die Aufgabe zugrunde, ein verbessertes Gerät zu schaffen, das die genannten und andere Nachteile vermeidet. Diese Aufgabe wird bei einer gattungsgemäßen Einrichtung und einem Verfahren nach den Ansprüchen gelöst.

### Kurzbeschreibung der Zeichnungen

- FIG. 1: zeigt in vereinfachter Darstellung das Blockdiagramm eines Kommunikationsgerätes entsprechend der vorliegenden Erfindung;
- FIG. 2: zeigt in vereinfachter Darstellung ein Flußdiagramm für ein Verfahren entsprechend der vorliegenden Erfindung; und
- FIG. 3: zeigt in vereinfachter Darstellung ein Zeitdiagramm eines akustischen Signals, das von einem an das Kommunikationsgerät anschließbaren Wandler bereitgestellt wird.

### Ausführliche Beschreibung der Zeichnungen

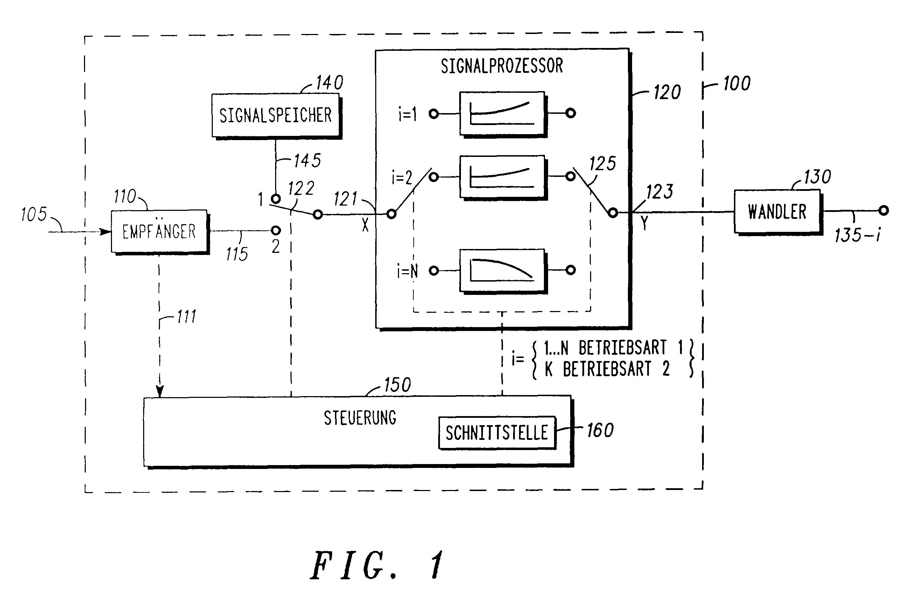

FIG. 1 zeigt in vereinfachter Darstellung das Blockdiagramm eines Kommunikationsgerätes 100 (im folgenden "Gerät 100", gestrichelter Rahmen) entsprechend der vorliegenden Erfindung. Gerät 100 umfaßt u.a. Empfänger 110, Prozessor 120 (z.B. Signalprozessor), Signalspeicher 140, sowie Steuereinrichtung 150 mit Benutzerschnittstelle 160. Hinzu kommen Schalter (oder Multiplexer) 122, 124 und 125, die Signalumschaltungen symbolisieren. Elektroakustischer Wandler 130 ist wahlweise Bestandteil des Gerätes 100 und kann innerhalb oder außerhalb untergebracht werden. Wandler 130 symbolisiert, daß Gerät 100 ein von Empfänger 110 empfangbares Nutzsignal 105 für einen Benutzer hörbar machen kann.

Um die Erläuterung zu vereinfachen und damit das Verständnis zu erleichtern, sind Elemente, die die Erfindung nicht unmittelbar betreffen, wie z.B. Signalverstärker und Stromversorgungsschaltungen nicht dargestellt. Zum Beispiel beinhaltet Prozessor 120 auch die Funktion des eingangs erwähnten Verstärkers.

Bei Gerät 100 handelt es sich bevorzugterweise um ein Mobiltelefon, bei dem Wandler 130 eingebaut ist und an das wahlweise ein anderer oder weiterer Wandler (z.B. Ohrhörer, Lautsprecher eines Autoradios) anschließbar ist. Aufgrund der folgenden Beschreibung ist der Fachmann in der Lage, die vorliegende Erfindung auch auf andere Geräte anzuwenden, ohne dabei den Bereich der Erfindung zu verlassen. Als Beispiel seien stellvertretend hier nur Bündelfunkgeräte und Betriebsfunkgeräte genannt.

Im allgemeinen ist Gerät 100 bevorzugterweise ortsveränderlich und tragbar.

Empfänger 110 empfängt Nutzsignal 105 (z.B. ein Datensignal über Funk, Infrarot, oder Kabel von einer Gegenstelle) und erzeugt ein Zwischensignal 115. Signalspeicher 140 (z.B. RAM, ROM) stellt eine Mustersignalfolge 145 (oder "Testmitteilung") bereit. Folge 145 ist bevorzugterweise eine Sprachprobe von vorherbestimmter Länge (z.B. einige Sekunden). Steuereinrichtung 150 leitet, symbolisch dargestellt mit Eingangsschalter 122, entweder Folge 145 (Betriebsart 1) oder Zwischensignal 115 (Betriebsart 2) an Eingang 121 des Prozessors 120 weiter.

Prozessor 120 filtert mit Übertragungsfunktion H = Y / X (im weiteren auch als "Frequenzgang" bezeichnet) das Signal X von Eingang 121 in Signal Y an Ausgang 123. Symbolisiert von Schalter 124 an Eingang 121 und Schalter 125 an Ausgang 123, wählt Steuereinheit 150 einen Frequenzgang Hi aus einer Menge von vorherbestimmten Frequenzgängen H1, ..., Hi, ..., HN aus.

Prozessor 120 ist bevorzugterweise ein digitaler Signalprozessor (DSP). Andere Implementierungsformen (z.B. Analogfilter mit Spulen, Kondensatoren und Widerständen) sind auch möglich. Beispielsweise verfügt Prozessor 120 über die folgenden Übertragungsfunktionen Hi:
- H1:: Betonung hoher Frequenzen, wobei Signale im Bereich ab 1000 Hz um 15 dB verstärkt werden;
- H2:: Beschneidung der unteren Frequenzen, wobei Signale im Bereich unter 800 Hz um 15 dB unterdrückt werden und damit der Umstand ausgenutzt wird, daß tiefe Frequenzen ohne Beeinträchtigung der Verständlichkeit unterdrückt werden können;
- H3:: Beschneidung der unteren Frequenzen und Betonung der hohen Frequenzen, wobei Signale im Bereich unter 1000 Hz um 10 dB gedämpft und Signale ab 1000 Hz um 10 dB verstärkt werden;
- H4:: Betonung der mittleren Frequenzen und Beschneidung der hohen und tiefen Frequenzen; und
- H5:: lineare Übertragung, wobei Verstärkung bzw. Dämpfung frequenzneutral sind.

Die Übertragungsfunktionen Hi des Prozessors 120 sind nicht auf Dämpfung bzw. Verstärkung in Abhängigkeit von der Frequenz beschränkt. Vielmehr können die Signale auch in anderer Weise bearbeitet werden, so zum Beispiel mit:
- H6:: Korrektur der Nachhallzeit, um Schallabsorptionen im Raum auszugleichen; und
- H7:: Rauschunterdrückung mit an sich bekannten Verfahren. In FIG. 1 sind verschiedene Frequenzgänge durch
Diagramme der Verstärkung in Abhängigkeit zur Frequenz symbolisch dargestellt.

Wandler 130 (z.B. Lautsprecher, Telefonhörerkapsel) wandelt das Signal an Ausgang 123 (modifiziertes Signal) in akustisches Signal 135-i (z.B. Sprache), das von dem Benutzer des Gerätes 100 vernommen wird.

Mit Schnittstelle 160 kann Steuereinrichtung 150 aus der Menge der N angebotenen Signale 135-i den Benutzer nach dessen bevorzugten akustischen Signal 135-k bzw. nach dessen bevorzugten Frequenzgang Hk abfragen (1 ≤ k ≤ N).

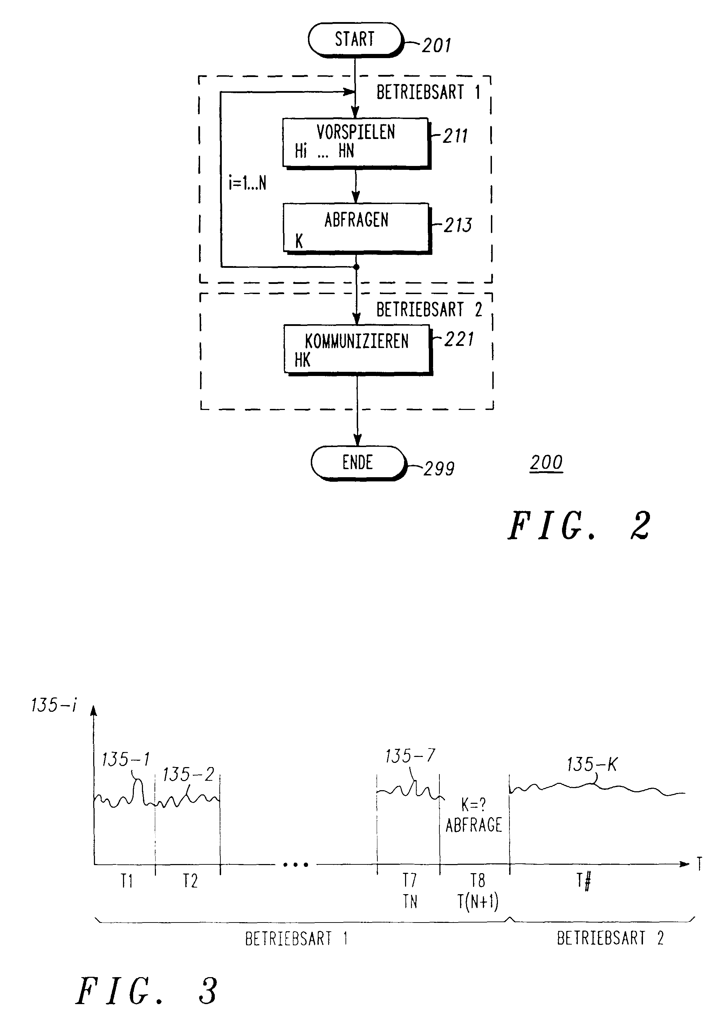

FIG. 2 zeigt in vereinfachter Darstellung ein Flußdiagramm für Verfahren 200 entsprechend der vorliegenden Erfindung zum Auswählen eines bevorzugten Frequenzgangs bei einem Kommunikationsgerät.

In der Erläuterung wird auf das in FIG. 1 gezeigte Blockschaltbild von Gerät 100 Bezug genommen. Der Fachmann ist jedoch in der Lage, Verfahren 200 auch für andere Anordnungen anzuwenden, ohne dabei den Bereich der Erfindung zu verlassen. Nach Verfahren 200 kann Gerät 100 in zumindest den beiden Betriebsarten 1 (WÄHLEN) und 2 (KOMMUNIZIEREN) betrieben werden. In FIG. 2 werden Betriebsarten 1 und 2 durch gestrichelte Rahmen gekennzeichnet.

In der Betriebsart 1 schaltet Steuereinrichtung 150 den Eingang 121 des Prozessors 120 an den Ausgang 122 des Signalspeichers 140 (vgl. FIG. 1, Schalter 122 in Position 1). Im Verfahrensschritt Vorspielen 211 wird, bevorzugterweise zyklisch für i = 1 bis N (vgl. Wiederhollinie 212), die Musterfolge 145 von Prozessor 120 mit Frequenzgängen H1 bis HN an Wandler 130 weitergeleitet und dem Benutzer als modifizierte Folge 135-i akustisch vorgestellt.

Im folgenden Verfahrensschritt Abfragen 213 bestimmt Steuereinrichtung 150 mit Hilfe der Schnittstelle 160 den Index k der modifizierten Folge, die dem Benutzer am verständlichsten scheint.

Als Ergebnis der Schritte 211 und 213 stellt Steuereinrichtung 150 den Index k des benutzerbestimmten Frequenzganges bereit.

In der nun folgenden Betriebsart 2 mit Verfahrensschritt Kommunizieren 221 schaltet Steuereinrichtung 150 den Eingang 121 des Prozessors 120 an den Ausgang des Empfängers 110 (vgl. FIG. 1, Schalter 122 in Position 2). Das von Empfänger 110 empfangene Nutzsignal 105 (z.B. über Funk übertragen und im GSM-Standard kodiert) wird von Prozessor 120 mit dem Frequenzgang Hk (i = k) hörbar gemacht, bei dem die höchste Verständlichkeit zu erwarten ist. Zum Beispiel wird Nutzsignal 105 an Wandler 130 weitergeleitet, der akustisches Signal 135-k bereitstellt.

FIG. 3 zeigt in vereinfachter Darstellung ein Zeitdiagramm (Zeit t) des akustischen Signals 135-i. In Zeitabschnitten T1 bis T(N+1) arbeitet Gerät 100 in Betriebsart 1, und in dem darauf folgenden, hier unbegrenzt dargestellten, Zeitabschnitt T# arbeitet Gerät 100 in Betriebsart 2.

In den Abschnitten T1 bis TN (z.B. T1 bis T7) hat der Benutzer die Möglichkeit, die Mustersignalfolge 145 mit den verschiedensten Klangschattierungen (H1 bis H7) wahrzunehmen. In dem folgenden Abschnitt T(N+1) (z.B. T8) wird dem Benutzer die Möglichkeit eingeräumt, anzugeben (z.B. durch Eingabe von k (1 ≤ k ≤ N)), welche Folge am besten verständlich war. Gerät 100 wechselt dann zur Betriebsart 2 (Abschnitt T#) und verwendet von da an den vom Benutzer gewählten Frequenzgang Hk.

Es ist ein Vorteil der vorliegenden Erfindung, daß der Benutzer die akustische Wiedergabe ohne die Verwendung von Meßgeräten optimieren kann.

Um den Wünschen des Benutzers entgegenzukommen, können Gerät 100 und Verfahren 200 verändert werden, ohne über den Umfang der vorliegenden Erfindung hinauszugehen. Aus der Fülle von möglichen Änderungen, die vom Fachmann ohne weitere Erläuterung vorgenommen werden können, seien nur einige erwähnt.
- Mustersignalfolge 145 kann sowohl als Sprachsignal (z.B. Referenzstimme) als auch als Melodie (Musik) bereitgestellt werden.
- Mustersignalfolge 145 kann bei Bedarf über Empfänger 110 und Nutzsignal 105 bezogen werden. Beispielsweise kann in einem Mobilfunknetz der Netzbetreiber seinen Kunden (hier "Benutzer") eine Auswahl an Mustersignalen zum wahlweisen Laden in dessen Mobiltelefon (hier "Gerät 100") zur Verfügung stellen. Mit anderen Worten, Mustersignalfolge 145 ist aus einer Menge von Signalfolgen wählbar. Die aus dem Netz empfangene Mustersignalfolge wird in Gerät 100 selbst gespeichert und braucht nicht bei jedem neuen Einstellvorgang (Betriebsart 1) neu geladen zu werden.
- Die in Gerät 100 verwendeten Signale (besonders Zwischensignal 115 und Folge 145) können vorteilhafterweise in digitaler Form bereitgestellt werden, wobei Prozessor 120 ein digitaler Signalprozessor (DSP) ist.
- Die Funktionen des Sprachprozessors 120 sowie der Steuereinrichtung 150 lassen sich in die üblichen Einrichtungen (z.B. DSP, Mikroprozessor) eines Mobiltelefons oder ähnlichen Gerätes integrieren.
- Wie oben erwähnt, kann der Frequenzgang H des Prozessors 120 zyklisch aus einer Menge vorherbestimmter Frequenzgänge gewählt werden (vgl. Betriebsart 1). Dabei kann der Anfang des Mustersignals immer dann bereitgestellt werden, wenn Steuereinrichtung 150 den Frequenzgang H des Prozessors 120 ändert. Mit anderen Worten, mit jeder Änderung des Frequenzgangs beginnt die Signalfolge 145 von vorn.
- Die Änderung des Frequenzgangs H ist nicht auf Betriebsart 1 beschränkt. Vielmehr kann, wenn dies vom Benutzer erwünscht ist, der Frequenzgang auch während Betriebsart 2 (z.B. während eines Gesprächs) geändert werden.
- Steuereinrichtung 150 kann bei Bedarf auch über Empfänger 110 gesteuert werden (gestrichelte Linie 111). Beispielsweise kann die Gegenstelle (z.B. Funkgerät, Rundfunksender, Telefon, Basisstation) je nach Qualität des in Signal 105 kodierten Sprachsignals einen bevorzugten Frequenzgang vorgeben. Zum Beispiel, sollte die Sendeleistung der Gegenstelle abnehmen, könnte automatisch eine Rauschunterdrückung in Prozessor 120 aktiviert werden.
- Steuereinrichtung 150 kann den benutzerbestimmten Frequenzgang speichern. Mit anderen Worten, Steuereinrichtung 150 speichert den benutzerbestimmten Frequenzgang auch dann, wenn in einer dritten Betriebsart Empfänger 110 keine Nutzsignale 105 empfängt.
- Steuereinrichtung 150 kann entsprechend dem vom Benutzer gewählten Wandler (z.B. Lautsprecher, Hörer) eine dem jeweiligen Wandler angepaßte Vorauswahl an Frequenzgängen anbieten (z.B. Ha1,...,HaNa für Wandlertyp (a), und Hb1,...,HbNb für Wandlertyp (b), usw.).

An dieser Stelle sei ein weiterer Vorteil der vorliegenden Erfindung erwähnt. In Fahrzeugen (z.B. Autos, LKW) eingebaute Lautsprecher sind in den meisten Fällen für die Wiedergabe von Musik optimiert. Besonders beim Nachrüsten von Mobiltelefonen (d.h. Gerät 100) in Fahrzeuge werden die Telefone wahlweise an die bereits vorhandenen Lautsprecher angeschlossen. Eine Klangoptimierung zwischen z.B. Autoradio und Mobiltelefon durch deren Hersteller kann in den wenigsten Fällen erwartet werden, da die Gerätehersteller oft nicht kooperieren. Mit Hilfe der vorliegenden Erfindung kann der Benutzer trotzdem den für ihn günstigsten Klang auswählen.
- Verfahrensschritte 211 und 213 in Betriebsart 1 müssen nicht nacheinander ausgeführt werden. Abfrageschritt 213 kann auch in die Wiederholungen (212) einbezogen werden. Damit läßt sich vorteilhafterweise eine Benutzerführung durch Sprachmenüs einrichten.
- Zu Beginn (bzw. Ende) einer jeden Wiedergabe der Signalfolge 145 kann eine Ansage den Benutzer über die jeweilige Signalfolge informieren (z.B. "Sie hören Folge 1" zu Beginn von T1).

Die vorliegende Erfindung kann auch beschrieben werden als akustische Ausgabeeinrichtung 100/130 mit Prozessor 120 und anschließbarem Wandler 130, wobei bei Prozessor 120 die Signalverformung (d.h. Übertragungsfunktion, z.B. der Frequenzgang H) aus einer Menge vorherbestimmter Signalverformungen (z.B. Frequenzgängen Hi (1 ≤ i ≤ N)) ausgewählt werden kann. Einrichtung 100/130 ist gekennzeichnet durch
- Speicher 140 für Signalfolge 145 (Mustersignalfolge), die wiederholt (vgl. Wiederhollinie 212) mit verschiedenen Signalverformungen (z.B. Hi) über Prozessor 120 an Wandler 130 abgegeben wird, und dabei einem Benutzer als geformte (bzw. gefilterte) Signalfolgen (135-i) hörbar gemacht werden; und
- Auswahleinrichtung 150, mit der der Benutzer subjektiv eine geformte (bzw. gefilterte) Signalfolge 135-k (1 ≤ k ≤ N) auswählt, so daß die entsprechende Signalverformung (bzw. der entsprechende Frequenzgang Hk) von Prozessor 120 auf weitere Signalfolgen 110/115 (z.B. Kommunikationssignale) angewendet werden kann, die nicht in Speicher 140 gespeichert sind.

Prozessor 120 kann dabei u.a. einzeln und in Kombination die folgenden Funktionen erfüllen: Frequenzfilter, Rauschunterdrückungseinrichtung, Dynamikkompressor, Lautstärkebegrenzer, Echogenerator, und/oder Laufzeitglied.

Verfahren 200 der vorliegenden Erfindung kann auch als Verfahren zum Auswählen einer Übertragungsfunktion in Kommunikationsgerät 100 beschrieben werden:
- Wiederholtes Ausgeben einer vorherbestimmten Signalfolge (145) an einen Benutzer, wobei die Signalfolge (145) im Kommunikationsgerät gespeichert ist (z.B. in Speicher 140) und bei jeder Ausgabe mit einer vorherbestimmten Übertragungsfunktion (z.B. Frequenzgang) modifiziert wird (H1 bis HN);
- Auswählen einer modifizierten Signalfolge 135-k durch den Benutzer und dabei Bestimmen einer bevorzugten Übertragungsfunktion Hk; und
- Übermitteln von Kommunikationssignalen (z.B. Signalen 105 über Empfänger 110) an den Benutzer, wobei die Signale mit der bevorzugten Übertragungsfunktion Hk modifiziert werden.

Während die vorliegende Erfindung durch bestimmte Strukturen, Geräte und Methoden beschrieben wurde, wird der Fachmann es schätzen, daß auf der Grundlage der vorliegenden Beschreibung, die nur auf die angeführten Beispiele beschränkt sein soll, der volle Umfang der Erfindung durch nun die folgenden Patentansprüche bestimmt wird.

## Patentansprüche

1. Funkgerät (100) mit Funkempfänger (110) zum Empfangen eines Nutzsignals (105); Prozessor (120) zum Filtern des Nutzsignals; und Schnittstelle (160) zum Auswählen einer ersten Betriebsart bzw. einer zweiten Betriebsart durch den Benutzer, die zweite Betriebsart zum Auswählen eines Filterfrequenzgang durch den Benutzer; das Funkgerät anschließbar an einen Wandler (130) zum Hörbarmachen des Nutzsignals, das Funkgerät dadurch gekennzeichnet, daß während der ersten Betriebsart der Prozessor in aufeinanderfolgenden Wiederholungen eine von einem Signalspeicher (140) bereitgestellte Mustersignalfolge mit jeweils einem anderen Frequenzgang aus einer Menge von vorherbestimmten Frequenzgängen filtert, so daß der Wandler diese Mustersignalfolge in den Wiederholungen hörbar macht, wobei der Benutzer einen jeweils anderen Klangeindruck von der Mustersignalfolge erfahren kann, und die Schnittstelle vom Benutzer dessen bevorzugten Frequenzgang aus der Menge der vorherbestimmten Frequenzgänge ermittelt.

2. Funkgerät (100) nach Anspruch 1, bei dem die Mustersignalfolge ein Sprachsignal ist.

3. Funkgerät (100) nach Anspruch 1, bei dem die Mustersignalfolge ein Melodiesignal ist.

4. Funkgerät (100) nach Anspruch 1, bei dem die Mustersignalfolge aus einer Menge von Signalfolgen wählbar ist.

5. Funkgerät (100) nach Anspruch 1, bei dem die Mustersignalfolge über den Funkempfänger bezogen wird.

6. Funkgerät (100) nach Anspruch 1, bei dem eine Gegenstelle einen bevorzugten Frequenzgang vorgibt.

7. Funkgerät (100) nach Anspruch 1, bei dem bei abnehmender Sendeleistung einer Gegenstelle der Prozessor zusätzlich zur Filterung eine Rauschunterdrückung aktiviert.

8. Verfahren zum Auswählen eines Frequenzgangs in einem Kommunikationsgerät, das Verfahren gekennzeichnet durch die folgenden Verfahrensschritte:
• wiederholtes Ausgeben einer im Kommunikationsgerät gespeicherten Signalfolge an einen Benutzer, wobei die Signalfolge bei jedem Ausgeben mit einem anderen vorherbestimmten Frequenzgang gefiltert wird;
• Auswählen einer gefilterten Signalfolge durch den Benutzer und dabei Bestimmen mit welchem Frequenzgang die ausgewählte Signalfolge gefiltert wurde; und
• Übermitteln von Kommunikationssignalen an den Benutzer, die vom Kommunikationssystem empfangen und mit dem im vorhergehenden Verfahrensschritt ausgewählten Frequenzgang gefiltert werden.

9. Akustische Ausgabeeinrichtung (100) mit Signalprozessor (120) und anschließbarem Wandler (130), wobei bei dem Signalprozessor (120) die Signalverformung aus einer Menge vorherbestimmter Signalverformungen ausgewählt werden kann, die Ausgabeeinrichtung gekennzeichnet durch
• einen Speicher (140) für eine Signalfolge, die wiederholt mit verschiedenen Signalverformungen über den Signalprozessor an den Wandler abgegeben wird, und dabei einem Benutzer als geformte Signalfolgen hörbar gemacht werden; und
• eine Auswahleinrichtung (160), mit der der Benutzer subjektiv eine geformte Signalfolge auswählt, so daß die entsprechende Signalverformung des Signalprozessors auf weitere Signale angewendet werden kann, die von der akustischen Ausgabeeinrichtung empfangen werden können und die nicht im Speicher gespeichert sind.

10. Akustische Ausgabeeinrichtung nach Anspruch 9, bei der der Signalprozessor (120) ein Frequenzfilter ist.

11. Akustische Ausgabeeinrichtung nach Anspruch 9, bei der der Signalprozessor (120) die Funktion einer Rauschunterdrückungseinrichtung hat.

12. Akustische Ausgabeeinrichtung nach Anspruch 9, bei der der Signalprozessor (120) einzeln und in Kombination die Funktionen eines Frequenzfilters, einer Rauschunterdrückungseinrichtung, eines Dynamikkompressors, eines Echogenerators, Laufzeitgliedes und/oder eines Lautstärkebegrenzers erfüllen kann.
